# EUROPÄISCHE PATENTSCHRIFT

(11) **EP 2 461 079 B1**
(45) Veröffentlichungstag und Bekanntmachung des Hinweises auf die Patenterteilung: **10.04.2019**
(21) Anmeldenummer: 11181246.7
(22) Anmeldetag: 14.09.2011
(51) Int. Cl.: G01F 15/14, F16L 55/04, G01F 1/66, G01F 1/84

(54) **Durchflussmesser**
Flowmeter
Débitmètre

(30) Priorität: 03.12.2010 EP 10193577
(43) Veröffentlichungstag der Anmeldung: 06.06.2012
(73) Patentinhaber: Levitronix GmbH, 8005 Zürich (CH)
(72) Erfinder: Häfliger, Mario, 5614 Sarmenstorf (CH); Barletta, Natale, Dr., 8048 Zürich (CH)
(74) Vertreter: Intellectual Property Services GmbH

(56) Entgegenhaltungen:
- EP-A1- 1 510 437
- EP-A2- 1 715 238
- WO-A1-2009/152321
- DE-A1- 10 015 051
- GB-A- 2 303 925
- US-A- 4 590 796

## Beschreibung

Die Erfindung betrifft einen Durchflussmesser zur Bestimmung des Durchflusses eines fluiden Mediums gemäss dem Oberbegriff des unabhängigen Vorrichtungsanspruchs. Die Erfindung betrifft ferner die Verwendung eines solchen Durchflussmesseres.

In vielen Fluidsystemen werden Durchflussmesser verwendet, um die Menge eines Fluids zu bestimmen oder zu regeln, welches an einen Prozess oder in einen Behälter geliefert oder aus diesen entnommen wird. Häufig basieren solche Durchflussmesser auf einem Ultraschallmesssignal oder auf dem Coriolisprinzip.

Typischerweise ist in einem solchen Fluidsystem eine Pumpe zum Fördern des Fluids vorgesehen. Das zu fördernde Medium gelangt dabei beispielsweise von einem Tank in eine Pumpe und wir anschliessend an einer Verzweigung in einen Hauptfluss und in einen Bypass-Fluss aufgeteilt. Der Bypass-Fluss dient beispielsweise dazu, dass sich das Medium bei einer geringen Hauptflussrate nicht unzulässig erwärmt oder um das im Tank befindliche Medium zu zirkulieren, damit es nicht zu Ablagerungen oder anderen unerwünschten Effekten kommt. Der Hauptfluss durchströmt einen Durchflussmesser und wird dann dem Prozess oder dem Behälter zugeführt. Die Aufteilung in Hauptfluss- und Bypass-Fluss erfolgt in der Regel über ein Ventil, welches dann mit Hilfe des vom Durchflussmesser ermittelten Signals gesteuert oder geregelt wird. Es ist üblich, den Durchflussmesser möglichst in der Nähe der Pumpe anzuordnen, z. B. aus Platzgründen oder, um möglichst wenig des Mediums im Fluidsystem zu haben.

Häufig werden als Pumpen Zentrifugalpumpen verwendet, beispielsweise solche, wie sie von der Anmelderin vertrieben werden, und die auf einem lagerlosen Motor mit scheibenförmigen Läufer basieren. Zentrifugalpumpen erzeugen prinzipbedingt Vibrationen, welche die Güte des Signals des Durchflussmessers sogar signifikant beeinflussen können. Hierbei handelt es sich zum einen um Vibrationen, die sich als mechanische Schwingungen über die Leitungen des Fluidsystems ausbreiten bzw. fortpflanzen und zum anderen um Druckschwankungen, die in dem Fluid generiert werden.

Diese Vibrationseinflüsse auf den Durchflussmesser sind bekannt und es sind auch Massnahmen zur Dämpfung solcher Vibrationen bekannt. Es gibt beispielsweise spezielle Vibrationsdämpfungsschläuche oder spiralförmig verlaufende Schläuche oder auch Druckausgleichsgefässe, welche dem Durchflussmesser vorgeschaltet werden.

Es gibt jedoch einige Prozesse, beispielsweise in der Halbleitertechnologie, die sehr hohe Anforderungen an die Totraumfreiheit, an die kompakte Bauform oder an ein besonders einfaches Vorfüllen des Systems (Priming) stellen und für welche die bekannten Massnahmen keine befriedigende Lösung darstellen.

Beispiele von durchströmbaren Dämpfungseinrichtungen werden in Patentschriften GB 2 303 925, EP 1 510 437 A1 oder EP 1 715 238 A2 gezeigt. Ausgehend von diesem Stand der Technik ist es daher eine Aufgabe der Erfindung, einen Durchflussmesser vorzuschlagen, bei welchem sowohl die Vibrationen auf dem Leitungssystem als auch die Druckschwankungen oder Unruhen im Fluid einen deutlich geringeren Einfluss auf die Güte des Messignals haben. Der Durchflussmesser soll insbesondere für solche Fluidsysteme geeignet sein, in welchem eine Zentrifugalpumpe vorgesehen ist.

Der diese Aufgabe lösende Durchflussmesser ist durch die Merkmale des unabhängigen Patentanspruchs der Vorrichtungskategorie gekennzeichnet.

Erfindungsgemäss wird also ein Durchflussmesser zur Bestimmung des Durchflusses eines fluiden Mediums vorgeschlagen mit einem Eingang, durch welchen das Medium in einen Messbereich einströmen kann und mit einem Ausgang, durch welchen das Medium ausströmen kann. Vor dem Eingang ist eine von dem Medium durchströmbare Dämpfungseinrichtung vorgesehen, welche eine erste durchströmbare Masse mit einem ersten Einlass und einem ersten Auslass für das Medium aufweist, eine zweite durchströmbare Masse mit einem zweiten Einlass und einem zweiten Auslass für das Medium sowie eine schwingfähige Strömungsverbindung, welche den ersten Auslass mit dem zweiten Einlass verbindet, wobei ein minimaler Strömungsquerschnitt der Strömungsverbindung kleiner als der Einlassquerschnitt am ersten Einlass oder kleiner als der Auslassquerschnitt am zweiten Auslass ist.

Durch diese Dämpfungseinrichtung lässt sich die Güte des Sensorsignals deutlich verbessern. Die erste und die zweite Masse bilden mit der dazwischen angeordneten schwingfähigen Strömungsverbindung ein schwingfähiges System, welches im Betriebszustand als geklemmtes System funktioniert, das heisst das schwingfähige System hat eine Eigenfrequenz, die deutlich kleiner ist als die Frequenzen der über das Leitungssystem übertragenen Vibrationen, die von der Pumpe erzeugt werden. Somit kann das schwingfähige System den Vibrationen nicht folgen, sodass diese durch die Dämpfungseinrichtung zumindest erheblich gedämpft werden. Zudem lassen sich durch die Verkleinerung des Strömungsquerschnitts zwischen dem ersten Einlass und dem zweiten Auslass die Druckschwankungen in der Fluidströmung stark dämpfen, das heisst die Fluidströmung wird beruhigt. Durch die Reduzierung des Strömungsquerschnitts wird die Reibung erhöht wodurch die Energie der Druckschwankungen in Reibung umgewandelt wird. Durch diese Dämpfungseinrichtung lassen sich also beide Störquellen für das Messignal, nämlich die Vibrationen auf dem Leitungssystem und die Unruhen im Fluidstrom zumindest deutlich dämpfen.

In der Praxis hat es sich dabei bewährt, wenn der minimale Strömungsquerschnitt der Strömungsverbindung mindestens viermal, vorzugsweise mindestens neunmal und insbesondere mindestens sechzehnmal kleiner ist als der Einlassquerschnitt am ersten Einlass oder der Auslassquerschnitt am zweiten Auslass. Die optimale Verkleinerung des Strömungsquerschnitts kann je nach Anwendungsfall angepasst werden. In der Regel ist es so, dass das Verhältnis aus dem minimalen Strömungsquerschnitt zum Einlass- oder Auslassquerschnitt umso kleiner gewählt wird, je kleiner der Durchfluss, d.h. die Durchflussrate, des Mediums ist.

Bei einem bevorzugten Ausführungsbeispiel ist die Strömungsverbindung als ein im wesentlichen zylinderförmiger Kanal ausgestaltet ist, welcher sich in einer Längsrichtung erstreckt. Diese Ausführung ist konstruktiv einfach und vermeidet unerwünschte Toträume.

Eine vorteilhafte Massnahme besteht darin, die Strömungsverbindung in einem Massenblock anzuordnen, welcher sich in Längsrichtung zwischen der ersten und der zweiten Masse erstreckt. Dieser Masseblock hat sich als günstig für die Vibrationsdämpfung erwiesen.

Vorzugsweise weist der Massenblock mindestens einen Übergang auf, an dem sich die Erstreckung des Massenblocks in einer zur Längsrichtung senkrechten Richtung ändert. Dies können beispielsweise Nuten oder Rillen sein, welche den Massenblock in Umfangsrichtung umlaufen. Dadurch ändert sich die Wanddicke des Massenblocks zwischen dünnwandigeren und dickwandigeren Bereichen. Die Übergänge zwischen den Bereichen unterschiedlicher Wandstärke bewirken eine zusätzliche Dämpfung der Vibrationen

Dieser Effekt ist besonders ausgeprägt, wenn sich die Erstreckung des Massenblocks in der zur Längsrichtung senkrechten Richtung sprunghaft ändert.

Daher ist es besonders bevorzugt, wenn der Massenblock mindestens eine Rippe aufweist, die sich entlang des gesamten Umfangs des Massenblocks in der zur Längsrichtung senkrechten Richtung erstreckt.

Materialtechnisch hat es sich als günstig erwiesen, wenn die Strömungsverbindung oder der Massenblock aus einem Thermoplast hergestellt ist.

Bei einer bevorzugten Ausführungsform umfasst der Durchflussmesser einen Ultraschallsensor.

Bei einer anderen Ausführungsform umfasst der Durchflussmesser einen Coriolissensor.

Eine bevorzugte Anwendung des erfindungsgemässen Durchflussmessers ist die Verwendung in einem Fluidsystem, in welchem eine Zentrifugalpumpe vorgesehen ist.

Speziell geeignet ist der erfindungsgemässe Durchflussmesser in einem Fluidsystem, in welchem eine Zentrifugalpumpe vorgesehen ist, die auf einem lagerlosen Motor mit scheibenförmigem Rotor basiert.

Weiter vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der schematischen Zeichnung zeigen teilweise im Schnitt:
- Fig. 1:: eine schematische Darstellung eines Fluidsystems mit einem Durchflusssensor,
- Fig.2:: eine schematische Darstellung eines Ausführungsbeispiels eines erfindungsgemässen Durchflussmessers,
- Fig. 3:: eine schematische Schnittdarstellung einer ersten Variante für die Dämpfungseinrichtung, und
- Fig. 4:: eine schematische Schnittdarstellung einer zweiten Variante für die Dämpfungseinrichtung.

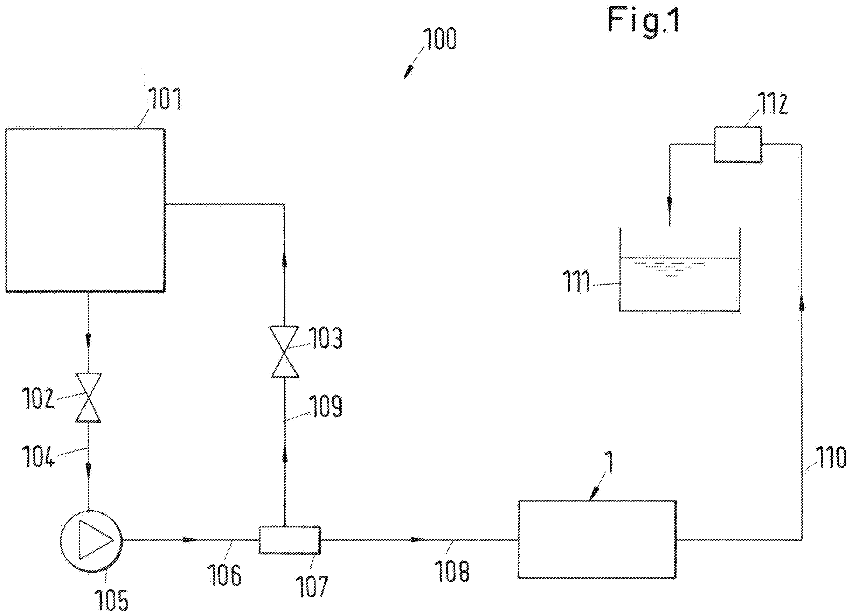

Fig. 1 zeigt in einer schematischen Darstellung ein Fluidsystem, das gesamthaft mit dem Bezugszeichen 100 versehen ist. Das Fluidsystem 100 umfasst einen Vorratsbehälter 101 für ein fluides Medium, beispielsweise ein Photolack für die Beschichtung von Halbleitern. Der Vorratsbehälter 101 ist über eine Speiseleitung 104 mit einer Pumpe 105 verbunden, welche das fluide Medium fördert und welche vorzugsweise als Zentrifugalpumpe ausgestaltet ist. In der Speiseleitung 104 ist ein erstes Ventil 102 vorgesehen, um die Strömungsverbindung zwischen dem Vorratsbehälter 101 und der Pumpe 105 zu öffnen oder zu verschliessen. Am Ausgang der Pumpe 105 schliesst sich eine Leitung 106 an, welche zu einer Verzweigungsvorrichtung 107 führt, wo das Fluid in einen Hauptfluss und in einen Bypass-Fluss aufgeteilt wird. Der Bypass-Fluss gelangt über eine Bypassleitung 109, in welcher ein zweites Ventil 103 vorgesehen ist, zurück in den Vorratsbehälter 101.

Der Hauptfluss gelangt über eine weitere Leitung 108 zu einem Durchflussmesser 1, mit welchem die Flussrate des fluiden Mediums ermittelt wird. Von dem Durchflussmesser 1 gelangt das fluide Medium über eine Zuführleitung 110 zu einem Prozess 111 bzw. einem Behälter 111, dem es zugeführt werden soll. Optional kann in oder an der Zuführleitiung 110 auch noch eine Abgabeeinrichtung 112 vorgesehen sein, welche das Medium dem Prozess 111 bzw. dem Behälter 111 zuführt.

Die Aufteilung des Stroms in den Hauptfluss und den Bypass-Fluss durch die Verzweigungsvorrichtung 107 kann beispielsweise mithilfe des vom Durchflussmesser 1 ermittelten Flussrate geregelt oder gesteuert werden. Dazu kann die Verzweigungsvorrichtung beispielsweise ein regelbares Drei-Wege-Ventil umfassen.

Die Pumpe 105 ist vorzugsweise als Zentrifugalpumpe ausgestaltet und besonders bevorzugt als eine Zentrifugalpumpe, die auf einem lagerlosen Motor mit scheibenförmigem Rotor, insbesondere permanentmagnetischem Rotor basiert. Ein solcher lagerloser Motor bzw. eine darauf basierende Zentrifugalpumpe wird beispielsweise in der EP-A-0 860 046 und auch in der EP-A-0 819 330 offenbart und bedarf hier daher keiner näheren Erläuterung.

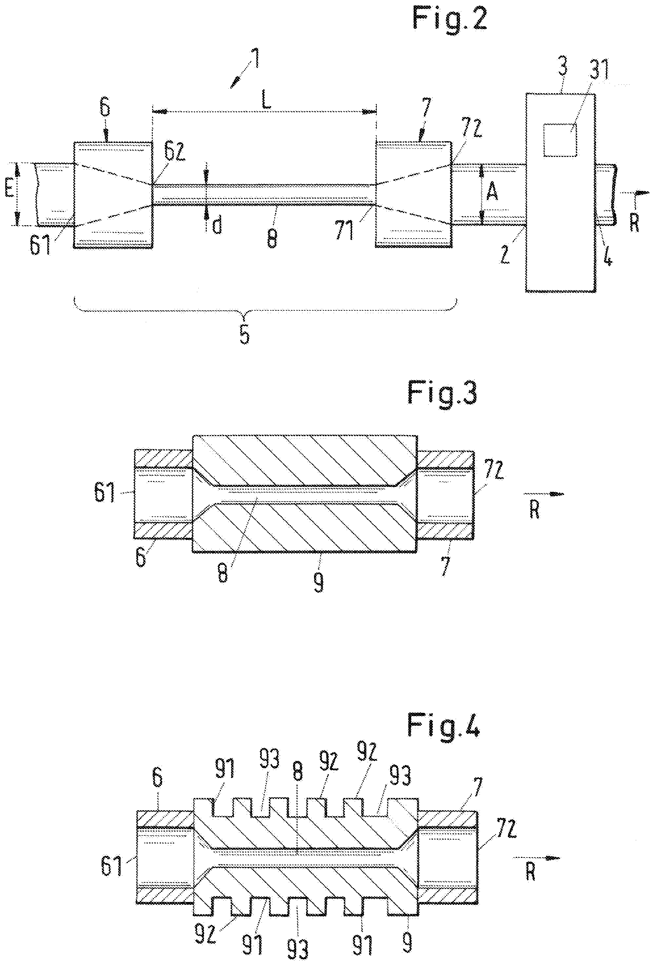

Der Durchflussmesser 1 ist als erfindungsgemässer Durchflussmesser 1 ausgestaltet. Fig. 2 zeigt in einer schematische Darstellung ein Ausführungsbeispiel des erfindungsgemässen Durchflussmessers 1.

Der Durchflussmesser 1 zur Bestimmung des Durchflusses eines fluiden Mediums, beispielsweise einer Flüssigkeit, umfasst einen Eingang 2, durch welchen das Medium in einen Messbereich 3 einströmen kann, sowie einen Ausgang 4, durch welchen das Fluid aus dem Messbereich 3 ausströmen kann. In diesem Messbereich 3 ist ein Sensor 31 vorgesehen, mit dessen Messsignal der Durchfluss bzw. die Durchflussrate des fluiden Mediums ermittelt werden kann.

Vorzugsweise ist der Sensor 31 ein Ultraschallsensor oder ein Coriolissensor. Derartige Sensoren 31 an sich sind Stand der Technik und bedürfen daher keiner weiteren Erläuterung. Als Ultraschallsensoren eignen sich insbesondere auch solche, die von der Firma Levitronix unter dem Markennamen LEVIFLOW vertrieben werden.

Stromaufwärts vor dem Eingang 2 ist eine Dämpfungseinrichtung 5 vorgesehen, die sowohl Vibrationen dämpft, die sich auf den Leitungen 106, 108 ausbreiten bzw. fortpflanzen, als auch den Durchfluss des Mediums in den Leitungen 106,108 beruhigt. Die erstgenannten Vibrationen haben ihren Ursprung unter anderem in der Zentrifugalpumpe 105, die prinzipbedingt Vibrationen erzeugt, welche sich über die Leitungen 106, 108 fortpflanzen können und das Messsignal des Sensors 31 erheblich beeinflussen könnten. In dem Fluid selbst können Druckschwankungen, beispielsweise auch verursacht durch die Pumpe 105, auftreten oder andere Inhomogenitäten wie beispielsweise Wirbelbildung durch turbulente Strömungen. Beide Störeffekte, also die Vibrationen sowie die Schwankungen in dem fluiden Medium, werden durch die Dämpfungseinrichtung 5 zumindest stark gedämpft. Vorzugsweise ist die Dämpfungseinrichtung 5 unmittelbar vor oder zumindest so nah wie möglich am Eingang 2 in den Messbereich 3 angeordnet.

Die Dämpfungseinrichtung 5 ist von dem Medium durchströmbar und umfasst eine erste Masse 6 mit einem ersten Einlass 61 für das Medium und einem ersten Auslass 62 sowie eine zweite Masse 7 mit einem zweiten Einlass 71 und einem zweiten Auslass 72 für das Medium. Ferner ist eine schwingfähige Strömungsverbindung 8 vorgesehen, welche den ersten Auslass 62 mit dem zweiten Einlass 71 verbindet. Diese Strömungsverbindung 8 weist einen minimalen Strömungsquerschnitt d auf, der kleiner ist als der Einlassquerschnitt E am ersten Einlass 61 oder kleiner als der Auslassquerschnitt A am zweiten Auslass 72. Vorzugsweise ist der minimale Strömungsquerschnitt d kleiner als der Einlassquerschnitt E am ersten Einlass 61 und kleiner als der Auslassquerschnitt A am zweiten Auslass 72.

Dabei ist mit der Bezeichnung "Querschnitt" jeweils eine Fläche gemeint, nämlich diejenige Fläche, welche an der entsprechenden Stelle für die Fluiddurchströmung zur Verfügung steht. So ist beispielsweise der minimale Strömungsquerschnitt d identisch mit der kleinsten Fläche senkrecht zur Strömungsrichtung in der Strömungsverbindung 8.

Bei dem in Fig. 2 dargestellten Ausführungsbeispiel ist die schwingfähige Strömungsverbindung 8 als ein zylindrisches Rohr ausgestaltet bzw. als ein im wesentlichen zylindrischer Kanal ausgestaltet, welcher sich in einer Längsrichtung R erstreckt, die mit der Strömungsrichtung des Fluids überseinstimmt und welcher den ersten Auslass 62 mit dem zweiten Einlass 71 verbindet. In diesem Fall ist der minimale Querschnitt d der Strömungsverbindung die Kreisfläche des zylindrischen Rohrs. Innerhalb der ersten Masse 6 reduziert sich der Strömungsquerschnitt vom Einlassquerschnitt E auf den Querschnitt d der Strömungsverbindung 8 und innerhalb der zweiten Masse 7 vergrössert sich der Strömungsquerschnitt von d auf den Auslassquerschnitt A.

Je nach Anwendungsfall kann der minimale Querschnitt der Strömungsverbindung sehr klein im Vergleich zum Einlassquerschnitt E oder zum Auslassquerschnitt A sein. In der Praxis hat es sich bewährt, wenn der minimale Strömungsquerschnitt d der Strömungsverbindung 8 mindestens viermal, vorzugsweise mindestens neunmal und für einige Anwendungen mindestens sechszehnmal kleiner ist als der Einlassquerschnitt E am ersten Einlass 61 oder der Auslassquerschnitt A am zweiten Auslass 72. Bei kreisförmigen Querschnitten bedeutet dies, dass das Verhältnis aus dem Durchmesser der Strömungsverbindung 8 zum Durchmesser des ersten Einlass 61 oder des zweiten Auslass 62 höchstens ½, vorzugsweise höchstens ⅓ und speziell höchstens ¼ beträgt. Das optimale Verhältnis aus dem minimalen Strömungsquerschnitt d der Strömungsverbindung 8 zum Hauptstrom bzw. zum Einlass- oder Auslassquerschnitt E; A hängt natürlich von der jeweiligen Anwendung ab und kann an diese angepasst werden. In der Regel ist es so, dass dieses Verhältnis umso kleiner zu wählen ist, je kleiner die Flussrate ist. Bei sehr kleinen Flussraten von beispielsweise weniger als 100 ml pro Minute kann die Strömungsverbindung 8 im Vergleich zu den übrigen Leitungen durchaus als Kapillare ausgebildet sein mit einem Durchmesser von weniger als 2 mm, beispielsweise 0.5 bis 1.8 mm. Die richtige Bemessung hängt auch von der Art des Fluids beispielsweise seiner Viskosität ab. Ein weiterer Parameter der insbesondere zur Optimierung der Flussberuhigung angepasst werden kann, ist die Lämge L der Strömungsverbindung 8.

Die erste und die zweite Masse 6 bzw. 7 bilden zusammen mit der Strömungsverbindung 8 ein schwingfähiges System. Dabei stellen die beiden Massen 6,7 im Vergleich zu der Strömungsverbindung 8 grosse Massen mit hoher Steifigkeit dar, während die Strömungsverbindung 8 im Vergleich dazu eine kleine Masse mit sehr kleiner Steifigkeit darstellt. In einem mechanischen Analogon sind die beiden grossen Massen 6, 7 über die als Feder wirkende Strömungsverbindung 8 miteinander gekoppelt. Dieses System hat eine Eigenfrequenz bzw. eine Grenzfrequenz, die von den Massen 6, 7 und der Steifigkeit der Strömungsverbindung 8 abhängt. Die Steifigkeit der Strömungsverbindung ist also quasi die Federkonstante. Durch eine Abstimmung der Massen 6,7 und der Steifigkeiten kann somit die Grenzfrequenz des aus der ersten und zweiten Masse 6,7 sowie der Strömungsverbindung 8 gebildeten schwingfähigen Systems eingestellt werden. Die Grenzfrequenz wird nun so eingestellt, dass sie klein ist im Vergleich zu den Frequenzen der Vibrationen, welche von der Pumpe 105 erzeugt werden bzw. die sich über die Leitungen 106, 108 ausbreiten und fortpflanzen. Durch diese Massnahme verhält sich das aus den beiden Massen 6,7 und dewr Strömungsverbindung 8 gebildete schwingfähige System im Betriebszustand wie ein geklemmtes System, also ein System, das mit Frequenzen angeregt wird, die deutlich grösser sind als die Grenzfrequenz bzw. die Eigenfrequenz des Systems. Dies hat zur Folge, dass Vibrationen über dieses schwingfähige System wenn überhaupt nur sehr stark gedämpft übertragen werden können, sodass die Vibrationen den Eingang 2 des Messbereichs 3 nicht mehr oder nur sehr stark gedämpft erreichen können. Die Dämpfungseinrichtung 5 bildet somit für die Vibrationen ein Tiefpassfilter, dessen Grenzfrequenz kleiner ist als die typischerweise im System auftretenden, sich über die Leitungen fortpflanzenden Vibrationen.

Je nach Anwendungsfall ist es dabei nicht unbedingt notwendig, dass die erste und die zweite Masse 6,7 diskrete zusätzlich vorhandene Massen sind. Es ist durchaus möglich, dass die erste und die zweite Masse 6,7 beispielsweise durch die Masse der Leitungen realisiert werden.

Die Beruhigung der Strömung innerhalb der Leitungen basiert insbesondere auf dem reduzierten Strömungsquerschnitt in der Strömungsverbindung 8. Hierdurch werden Inhomogenitäten oder Unruhen im Fluss in Reibungsenergie umgewandelt, was zu einer deutlichen Durchflussberuhigung führt.

Durch die Dämpfungseinrichtung 5 des erfindungsgemässen Durchflussmessers 1 werden also sowohl Vibrationen gedämpft, die sich auf den oder über die Leitungen des Fluidsystems 100 ausbreiten als auch Inhomogenitäten bzw. Unruhen in dem strömenden Medium. Beide Störeinflüsse werden somit vor dem Messbereich 3 zumindest deutlich reduziert, was die Messgenauigkeit deutlich steigert. Dies gilt insbesondere im Bereich kleiner Flussraten von beispielsweise weniger als 100 ml/min, wo sich solche Störungen besonders negativ auf das Messergebnis auswirken würden.

Durch die Verwendung der an den jeweiligen Anwendungsfall angepassten Strömungsverbindung 8, beispielsweise eine Kapillare, kann eine signifikante Durchflussberuhigung realisiert werden. Dies hat den Vorteil, dass die Filterzeitkonstanten zur softwaremässigen Durchflussberuhigung sehr klein gewählt werden können , was wiederum den positiven Effekt einer hohen Durchfluss-Regeldynamik mit sich bringt.

Da neben der Durchflussberuhigung auch eine deutliche Vibrationsdämpfung realisierbar ist, zeichnet sich der erfindungsgemässe Durchflussmesser 1 durch eine sehr hohe Genauigkeit bei hoher Dynamik aus.

Wie bereits erwähnt, muss der Strömungsquerschnitt in der Strömungsverbindung 8 nicht konstant sein, d.h. die Strömungsverbindung kann auch von der Form eines zylindrischen Kanals oder Rohres abweichen. Hier sind sehr viele geometrische Ausgestaltungen möglich. Beispielsweise kann sich die Strömungsverbindung 8 bezüglich ihres Strömungsquerschnitts zunächst verjüngen und dann wieder aufweiten, sie kann sich auch kontinuierlich bis auf den minimalen Strömungsquerschnitt d verjüngen und dann konstant bleiben. Der Strömungsquerschnitt innerhalb der Strömungsverbindung 8 kann auch von einer Kreisfläche abweichen und blsweise elliptisch oder rechteckig sein. Die Änderung des Strömungsquerschnitts kann kontinuierlich, stetig oder sprunghaft realisiert sein. Dies sei erwähnt, um nur einige mögliche Varianten zu beschreiben.

Die Strömungsverbindung 8 wird vorzugsweise aus einem Kunststoff hergestellt und insbesondere aus einem Thermoplast. Mit beispielhaftem Charakter seien hier die folgenden Kunststoffe genannt: PP, PTFE, PVDF, PFA, PE, ECTFE, ETFE.

Eine besonders vorteilhafte Massnahme besteht darin, die Strömungsverbindung 8 in einem Massenblock 9 anzuordnen, welcher sich in Längsrichtung R zwischen der ersten Masse 6 und der zweiten Masse 7 erstreckt. Eine solche erste Variante ist in Fig. 3 in einer Schnittdarstellung veranschaulicht. Es hat sich gezeigt, dass sich insbesondere die Vibrationen durch den Massenblock 9 reduzieren lassen. Auch bei dieser Variante ist es möglich, dass die erste und die zweite Masse 6,7, nicht als separate Bauteile vorgesehen sind, sondern beispielsweise durch die Leitungen 108 usw. realisiert werden. Der Massnblock 9 ist vorzugsweise auch aus einem Kunststoff gefertigt, insbesondere aus einem Thermoplast, von denen weiter vorne Beispiele genannt sind. Die Strömungsverbindung 8 kann entweder als separate Röhre in den Massenblock 9 eingeschoben sein oder sie ist durch eine entsprechende Bohrung im Massenblock 9 realisiert. Senkrecht zur Längsrichtung R kann der Massenblock 9 beispielsweise mit kreisförmigen, ovalen oder rechteckigem Querschnitt ausgestaltet sein.

In Fig. 4 ist in einer schematischen Schnittdarstellung eine zweite Variante für die Dämpfungseinrichtung 5 gezeigt. Auch hier ist der Massenblock 9 vorgesehen. Die Erläuterungen der ersten Variante gelten in sinngemäss gleicher Weise auch für die zweite Variante. Bei der zweiten Variante weist der Massenblock 9 mindestens einen Übergang 91 auf, an dem sich die Erstreckung des Massenblocks 9 in einer zur Längsrichtung R senkrechten Richtung ändert. Es hat sich nämlich gezeigt, dass sich durch solche Übergänge 91 die Vibrationen sehr stark dämpfen lassen. Besonders günstig ist es dafür wenn sich an dem Übergang 91 die Erstreckung des Massenblocks 9 in der zur Längsrichtung R senkrechten Richtung sprunghaft ändert.

Wie dies Fig. 4 zeigt, sind vorzugsweise mehrere solche Übergänge 91 vorgesehen. Im Speziellen weist der Massenblock 9 gemäss der Variante in Fig. 4 mindestens eine, hier mehrere Rippen 92 auf, die sich jeweils entlang des gesamten Umfangs des Massenblocks 9 in der zur Längsrichtung R senkrechten Richtung erstrecken. Die Rippen 92 sind durch Umfangsnuten 93 voneinander getrennt. Jeder Wechsel von einer Nut 93 zu einer Rippe 92 stellt einen Übergang 91 dar, der sich positiv auf die Dämpfung der Vibrationen auswirkt. Die Anzahl der Rippen 92 bzw. der Umfangsnuten 93 hängt vom Anwendungsfall ab und kann in einfacher Weise optimiert weren. Auch bei dieser zweiten Variante ist es möglich, dass die erste und die zweite Masse 6,7 nicht als separate Bauteile vorgesehen sind, sondern beispielsweise durch die Leitungen oder Teile des Massenblocks 9 realisiert sind.

Der erfindungsgemässe Durchflussmesser 1 eignet sich insbesondere für solche Fluidsysteme 100, in welchen die Pumpe 105 eine Zentrifugalpumpe ist und speziell eine Zentrifugalpumpe, die auf einem lagerlosen Motor mit scheibenförmigem, vorzugsweise permanentmagnetischem Rotor basiert.

Insbesondere ist der erfindungsgemässe Durchflussmesser auch für Anwendungen in der Herstellung und Bearbeitung von Halbleitern und Halbleiterstrukturen geeignet sowie für Anwendungen, bei denen es auf sehr kompakte Ausgestaltungen oder auf möglichst hohe Totraumfreiheit oder auf ein einfaches Vorfüllen des Systems (Priming) ankommt.

## Patentansprüche

1. Durchflussmesser zur Bestimmung des Durchflusses eines fluiden Mediums mit einem Eingang (2), durch welchen das Medium in einen Messbereich (3) einströmen kann und mit einem Ausgang (4), durch welchen das Medium ausströmen kann, **dadurch gekennzeichnet, dass** vor dem Eingang (2) eine von dem Medium durchströmbare Dämpfungseinrichtung (5) vorgesehen ist, welche eine erste durchströmbare Masse (6) mit einem ersten Einlass (61) und einem ersten Auslass (62) für das Medium aufweist, eine zweite durchströmbare Masse (7) mit einem zweiten Einlass (71) und einem zweiten Auslass (72) für das Medium sowie eine schwingfähige Strömungsverbindung (8), welche den ersten Auslass (62) mit dem zweiten Einlass (71) verbindet, wobei ein minimaler Strömungsquerschnitt (d) der Strömungsverbindung (8) kleiner als der Einlassquerschnitt (E) am ersten Einlass (61) oder kleiner als der Auslassquerschnitt (A) am zweiten Auslass (72) ist.

2. Durchflussmesser nach Anspruch 1, bei welchem der minimale Strömungsquerschnitt (d) der Strömungsverbindung (8) mindestens viermal, vorzugsweise mindestens neunmal und insbesondere mindestens sechzehnmal kleiner ist als der Einlassquerschnitt (E) am ersten Einlass (61) oder der Auslassquerschnitt (A) am zweiten Auslass (72).

3. Durchflussmesser nach einem der vorangehenden Ansprüche bei welchem die Strömungsverbindung (8) als ein im wesentlichen zylinderförmiger Kanal ausgestaltet ist, welcher sich in einer Längsrichtung (R) erstreckt.

4. Durchflussmesser nach einem der vorangehenden Ansprüche bei welchem die Strömungsverbindung (8) in einem Massenblock (9) angeordnet ist, welcher sich in Längsrichtung (R) zwischen der ersten und der zweiten Masse (6,7) erstreckt.

5. Durchflussmesser nach Anspruch 4, bei welchem der Massenblock (9) mindestens einen Übergang (91) aufweist, an dem sich die Erstreckung des Massenblocks (9) in einer zur Längsrichtung (R) senkrechten Richtung ändert.

6. Durchflussmesser nach Anspruch 5, bei welchem sich die Erstreckung des Massenblocks (9) in der zur Längsrichtung (R) senkrechten Richtung sprunghaft ändert.

7. Durchflussmesser nach einem der Ansprüche 4-6, bei welchem der Massenblock (9) mindestens eine Rippe (92) aufweist, die sich entlang des gesamten Umfangs des Massenblocks (9) in der zur Längsrichtung (R) senkrechten Richtung erstreckt.

8. Durchflussmesser nach einem der vorangehenden Ansprüche, bei welchem die Strömungsverbindung (8) oder der Massenblock (9) aus einem Thermoplast hergestellt ist.

9. Durchflussmesser nach einem der vorangehenden Ansprüche, welcher einen Ultraschallsensor (31) umfasst.

10. Durchflussmesser nach einem der vorangehenden Ansprüche, welcher einen Coriolissensor (31) umfasst.

11. Verwendung eines Durchflussmessers gemäss einem der vorangehenden Ansprüche in einem Fluidsystem (100), in welchem eine Zentrifugalpumpe (105) vorgesehen ist.

12. Verwendung eines Durchflussmessers gemäss einem der vorangehenden Ansprüche in einem Fluidsystem (100), in welchem eine Zentrifugalpumpe (105) vorgesehen ist, die auf einem lagerlosen Motor mit scheibenförmigem Rotor basiert.

## Claims

1. A flowmeter for determining the flow of a fluid medium having an inlet (2) through which the medium can flow into a measurement zone (3) and having an outlet (4) through which the medium can flow out, **characterized in that** a damping device (5) which can be flowed through by the medium is provided in front of the inlet (2), and has a first mass (6) which can be flowed through having a first inlet (61) and a first outlet (62) for the medium, a second mass (7) which can be flowed through having a second inlet (71) and a second outlet (72) for the medium as well as a flow connection (8) which is capable of vibration and which connects the first outlet (62) to the second inlet (71), wherein a minimal flow cross-section (d) of the flow connection (8) is smaller than the inlet cross-section (E) at the first inlet (61) or smaller than the outlet cross-section (A) at the second outlet (72).

2. A flowmeter in accordance with claim 1, wherein the minimal flow cross-section (d) of the flow connection (8) is at least four times, preferably at least nine times, and in particular at least sixteen times smaller than the inlet cross-section (E) at the first inlet (61) or than the outlet cross-section (A) at the second outlet (72).

3. A flowmeter in accordance with one of the preceding claims, wherein the flow connection (8) is designed as a substantially cylindrical passage which extends in a longitudinal direction (R).

4. A flowmeter in accordance with any one of the preceding claims, wherein the flow connection (8) is arranged in a mass block (9) which extends between the first and the second masses (6, 7) in the longitudinal direction (R).

5. A flowmeter in accordance with claim 4, wherein the mass block (9) has at least one transition (91) at which the extent of the mass block (9) changes in a direction perpendicular to the longitudinal direction (R).

6. A flowmeter in accordance with claim 5, wherein the extent of the mass block (9) changes abruptly in the direction perpendicular to the longitudinal direction (R).

7. A flowmeter in accordance with any one of the claims 4 to 6, wherein the mass block (9) has at least one rib (92) which extends along the total periphery of the mass block (9) in the direction perpendicular to the longitudinal direction (R).

8. A flowmeter in accordance with any one of the preceding claims, wherein the flow connection (8) or the mass block (9) is manufactured from a thermoplastic.

9. A flowmeter in accordance with any one of the preceding claims, which includes an ultrasonic sensor (31).

10. A flowmeter in accordance with any one of the preceding claims, which includes a Coriolis sensor (31).

11. Use of a flowmeter in accordance with any one of the preceding claims in a fluid system (100) in which a centrifugal pump (105) is provided.

12. Use of a flowmeter in accordance with any one of the preceding claims in a fluid system (100) in which a centrifugal pump (105) is provided which is based on a bearingless motor having a disk-shaped rotor.

## Revendications

1. Un débitmètre pour déterminer le débit d'un médium fluide ayant une entrée (2) par laquelle le fluide peut s'écouler dans une plage de mesure (3) et une sortie (4) par laquelle le fluide peut s'écouler, **caractérisé en ce qu'**un dispositif d'amortissement (5) à travers lequel le médium peut s'écouler est prévu devant l'entrée (2), lequel dispositif d'amortissement a une première masse (6) qui peut être écoulée, avec une première entrée (61) et une première sortie (62) pour le médium, une deuxième masse (7) qui peut être écoulée, avec une deuxième entrée (71) et une deuxième sortie (72) pour le médium et un raccord d'écoulement oscillant (8) reliant la première sortie (62) à la deuxième entrée (71) dans lequel une section transversale d'écoulement minimale (d) du raccord d'écoulement (8) est plus petite que la section transversale d'entrée (E) à la première entrée (61) ou plus petite que la section transversale de sortie (A) à la deuxième sortie (72).

2. Un débitmètre selon la revendication 1, dans lequel la section transversale d'écoulement minimale (d) du raccord d'écoulement (8) est au moins quatre fois, de préférence au moins neuf fois et en particulier au moins seize fois plus petite que la section transversale d'entrée (E) à la première entrée (61) ou la section transversale de sortie (A) à la deuxième sortie (72).

3. Un débitmètre selon l'une des revendications précédentes, dans lequel le raccord d'écoulement (8) est configuré sous la forme d'un canal sensiblement cylindrique s'étendant dans une direction longitudinale (R).

4. Un débitmètre selon l'une des revendications précédentes, dans lequel le raccord d'écoulement (8) est disposé dans un bloc de masse (9) qui s'étend dans la direction longitudinale (R) entre la première masse et la deuxième masse (6, 7).

5. Un débitmètre selon la revendication 4, dans lequel le bloc de masse (9) a au moins une transition (91) à laquelle l'extension du bloc de masse (9) change dans une direction perpendiculaire à la direction longitudinale (R).

6. Un débitmètre selon la revendication 5, dans lequel l'extension du bloc de masse (9) change brusquement dans la direction perpendiculaire à la direction longitudinale (R).

7. Un débitmètre selon l'une des revendications 4 à 6, dans lequel le bloc de masse (9) a au moins une nervure (92) s'étendant sur toute la circonférence du bloc de masse (9) dans la direction perpendiculaire à la direction longitudinale (R).

8. Un débitmètre selon l'une des revendications précédentes, dans lequel le raccord d'écoulement (8) ou le bloc de masse (9) est en thermoplastique.

9. Un débitmètre selon l'une des revendications précédentes, qui comprend un capteur ultrasonique (31).

10. Un débitmètre selon l'une des revendications précédentes, qui comprend un capteur de Coriolis (31).

11. L'utilisation d'un débitmètre selon l'une des revendications précédentes dans un système fluidique (100), dans lequel une pompe centrifuge (105) est prévue.

12. L'utilisation d'un débitmètre selon l'une des revendications précédentes dans un système fluidique (100), dans lequel une pompe centrifuge (105) est prévue, qui est basée sur un moteur sans palier avec un rotor en forme de disque.
